# EUROPÄISCHE PATENTSCHRIFT

(11) **EP 2 805 601 B1**
(45) Veröffentlichungstag und Bekanntmachung des Hinweises auf die Patenterteilung: **27.06.2018**
(21) Anmeldenummer: 14177263.2
(22) Anmeldetag: 21.12.2012
(51) Int. Cl.: A01D 65/02

(54) **Heber für Erntegut**
Lifter for crops
Levier pour récolte

(30) Priorität: 13.01.2012 DE 102012100302
(43) Veröffentlichungstag der Anmeldung: 26.11.2014
(62) Teilanmeldung aus: 12199207.7
(73) Patentinhaber: Gebr. Schumacher Gerätebaugesellschaft mbH, 57612 Eichelhardt (DE)
(72) Erfinder: Höller, Frank, 57629 Stein Wingert (DE); Schumacher, Friedrich-Wilhelm, 57612 Birnbach (DE)
(74) Vertreter: Neumann Müller Oberwalleney & Partner Patentanwälte

(56) Entgegenhaltungen:
- WO-A1-2006/072158
- DE-A1- 1 482 880
- DE-A1- 2 325 916
- DE-C- 864 637
- US-A- 2 734 332

## Beschreibung

Die Erfindung betrifft einen Heber für Erntegut für ein Mähwerk einer Erntemaschine, umfassend eine an dem Mähwerk befestigbare Tragschiene, wobei die Tragschiene einen Profilträger aufweist und wobei ein Heberprofil an dem Profilträger vorgesehen ist, oder wobei das Heberprofil mit der Tragschiene verbunden ist.

Aus dem Stand der Technik ist ein sogenannter Ährenheber bekannt, welcher mit dem vorderen Teil der Tragschiene, an dem ein Halmheber befestigt ist, über den Boden gleitet oder sich knapp über dem Boden bewegt und mit dem Halmheber am Boden liegende Halme des Ernteguts aufnimmt, so dass diese durch das Messerwerk des Mähwerks abgeschnitten werden können und somit die Ähren beispielsweise einem Dreschwerk zugeführt werden können. Einen derartigen Ährenheber zeigt die DE 23 25 916 A, bei dem der Halmheber durchgängig aus einem U-förmigen Profilteil besteht, dessen Schenkel sich ausgehend von der Verschweißung des Halmhebers an der Tragschiene zum freien Ende des Halmhebers zunehmend verkürzen. Ein Ährenheber nach dem Oberbegriff des Anspruchs 1 ist auch aus DE 1482880 bekannt. Bei Erntegut, welches die Früchte nicht an der Spitze von vergleichsweise langen Halmen trägt, wie dies bei Getreide der Fall ist, sondern an Sträuchern wächst, wie beispielsweise Hülsenfrüchte, sind die Früchte oder Schoten in dem gesamten Strauch verteilt, auch in dem bodennahen Bereich des Strauchs. Daraus ergibt sich die Forderung, derartiges Erntegut besonders knapp über dem Boden zu schneiden und durch spezielle Heber derart anzuheben, dass möglichst keine Früchte durch das Mähwerk zerstört werden. Dazu werden beispielsweise die zuvor beschriebenen Ährenheber mit der Abwandlung verwendet, dass die führende Spitze des Halmhebers so weit herabragt, dass diese idealer weise unmittelbar an der Ackeroberfläche geführt wird. Durch Steine im Boden werden die Ährenheber dabei jedoch häufig beschädigt und müssen aufwendig ausgetauscht bzw. instandgesetzt werden. Die WO 2006/072158 A1 betrifft einen Ährenheber, wobei vorgeschlagen wird, ein Heberprofil lösbar an einer tragenden Struktur anzuordnen, so dass das Heberprofil einzeln austauschbar ist und ein Austausch des gesamten Ährenhebers vermieden wird. Ein Nachteil besteht darin, dass ein Austausch der tragenden Struktur, falls dieser dennoch erforderlich wird, aufwändig ist und dass die Häufigkeit der Ausfälle der Heberprofile an sich nicht verringert wird.

Eine Aufgabe der Erfindung besteht darin, einen Heber für Erntegut zur Verfügung zu stellen, welcher weniger störungsanfällig und/oder mit geringerem Aufwand instand setzbar ist.

Die Aufgabe wird gelöst durch einen Heber für Erntegut gemäß Patentanspruch 1. In den Unteransprüchen sind bevorzugte Ausführungsformen und vorteilhafte Weiterbildungen angegeben.

Mit der Bezeichnung als Heber für Erntegut soll zum Ausdruck gebracht werden, dass keine Einschränkung auf ein spezielles Erntegut, wie Getreideähren oder Hülsenfrüchte vorgenommen wird. Die erfindungsgemäßen Heber für Erntegut sind als Heber für beliebiges Erntegut geeignet. Auf Besonderheiten in der Verarbeitung von speziellem Erntegut wird gegebenenfalls im Einzelnen eingegangen.

Der erfindungsgemäße Heber für Erntegut für ein Mähwerk einer Erntemaschine umfasst eine an dem Mähwerk befestigbare Tragschiene mit einen Profilträger für ein Heberprofil, in der Regel an einem in einer Arbeitsrichtung vorderen Ende der Tragschiene. Die Arbeitsrichtung entspricht in der Regel der Fahrtrichtung der Erntemaschine. Das Heberprofil ist vorzugsweise zur lösbaren Befestigung an dem Profilträger vorgesehen. Ein Vorteil dieses Hebers für Erntegut besteht darin, dass das Heberprofil einzeln von dem Profilträger lösbar und austauschbar ist. Bei einer Beschädigung kann dieser Austausch schnell und einfach durchgeführt werden. Die Ersatzteile in Form der einzelnen Profilträger sind wesentlich kleiner, leichter und kostengünstiger als vollständige, einteilige Ährenheber.

Gegenstand der Erfindung, der die Aufgabe löst, ist ein Heber für Erntegut für ein Mähwerk einer Erntemaschine, umfassend eine an dem Mähwerk befestigbare Tragschiene, wobei ein Heberprofil mit der Tragschiene verbunden ist, wobei die Tragschiene eine Ausnehmung zur Befestigung an dem Mähwerk aufweist, und wobei um die Ausnehmung herum eine Anschraubfläche derart in die Oberfläche der Tragschiene eingearbeitet ist, dass durch die Anschraubfläche und die Oberfläche definierte Ebenen einen spitzen Winkel einschließen. Als Anschraubfläche ist diejenige Fläche zu verstehen, auf welche der Kopf eines Gewindebolzens bzw. eine Gewindemutter beim Festziehen einer Schraubverbindung wirkt. Die entsprechenden Flächen an dem Kopf oder der Mutter sind parallel zu der Oberfläche der Tragschiene ausgerichtet und somit um den spitzen Winkel zu der Anschraubfläche gekippt. Es kommt zu einer Verspannung der Schraubverbindung, was die Festigkeit der Schraubverbindung nicht beeinträchtigt. Vorteilhaft wird dadurch eine Verlustsicherung für den gesamten Heber für Erntegut geschaffen. Bei einem selbsttätigen Lösen der Schraubverbindung kann sich der Heber in Arbeitsrichtung gesehen nach vorne verschieben, wodurch die Schraubverbindung vorteilhaft erneut verspannt wird, da die Anschraubfläche sich keilartig unter die Gewindemutter bzw. den Schraubenkopf schiebt. Ein weiterer Vorteil für die Handhabung des Hebers besteht darin, dass keine Sicherungsmaßnahmen zur Sicherung der Schraubverbindung vorgenommen werden müssen, welche im Falle eines durch Beschädigung notwendigen Austausches des Hebers aufwändig geöffnet werden müssten. Durch die abgeschrägte Anschraubfläche kann eine einfach zu lösende Schraubverbindung verwendet werden. Vorzugsweise weist der spitze Winkel ein Winkelmaß von weniger als 5 Grad auf, vorzugsweise von weniger als 3 Grad und besonders bevorzugt von etwa 1,5 Grad. Winkel von weniger als 0,5 Grad sind eher zu flach, als dass der erfindungsgemäße technische Effekt erzielt werden könnte.

Gemäß einer bevorzugten Ausführungsform ist die Ausnehmung als ein sich in Arbeitsrichtung erstreckendes Langloch ausgeführt und/oder die Ausnehmung ist zu einem in Arbeitsrichtung hinteren Ende der Tragschiene hin geöffnet. Dadurch ist besonders vorteilhaft eine Demontage und Montage des erfindungsgemäßen Hebers ohne ein vollständiges Herausdrehen des Bolzens aus der Mutter möglich. Weiterhin bevorzugt weist die Tragschiene eine Aufnahme für einen Mähfinger an dem Mähwerk der Erntemaschine auf. Mit dieser Aufnahme wird der Heber auf den in Arbeitsrichtung nach vorn weisenden Mähfinger aufgeschoben. Der Heber für Erntegut gemäß dem zuletzt beschriebenen Erfindungsgegenstand kann, ebenso wie die zuvor beschriebenen Gegenstände, ein abnehmbares Heberprofil aufweisen. Ebenso sollen aber auch einteilige Heber für Erntegut umfasst sein, bei denen das Heberprofil fest mit der Tragschiene verbunden ist.

Bevorzugte Ausführungsbeispiele werden nachfolgend mit Bezugnahme auf die Zeichnungen dargestellt.

Hierin zeigen:
Figur 1 eine perspektivische Ansicht einer Ausführungsform eines erfindungsgemäßen Hebers für Erntegut;
Figur 2 den Heber für Erntegut nach Figur 1 in einer Seitenansicht;
Figur 3 den Heber für Erntegut nach Figur 1 in einer Ansicht von oben auf das Heberprofil;
Figur 4 einen Querschnitt längs der Linie A-A nach Figur 2;
Figur 5 einen Schnitt längs der Linie J-J nach Figur 2;
Figur 6 eine Seitenansicht des Details G nach Figur 2;
Figur 7 eine Ansicht von oben des Details gemäß Figur 6;
Figur 8 einen Schnitt längs der Linie H-H nach Figur 7;
Figur 9 eine Seitenansicht einer einteiligen Ausführungsform des Hebers für Erntegut, festgelegt an einem Mähmesserbalken und Mähfinger einer Erntemaschine;
Figur 10 eine perspektivische Ansicht einer weiteren Ausführungsform eines erfindungsgemäßen Hebers für Erntegut;
Figur 11 eine Seitenansicht eines Details entsprechend Figur 6, jedoch in der Ausführungsform des Hebers gemäß Figur 10;
Figur 12 eine Ansicht von oben des Details gemäß Figur 11;
Figur 13 einen Schnitt längs der Linie H-H nach Figur 12.

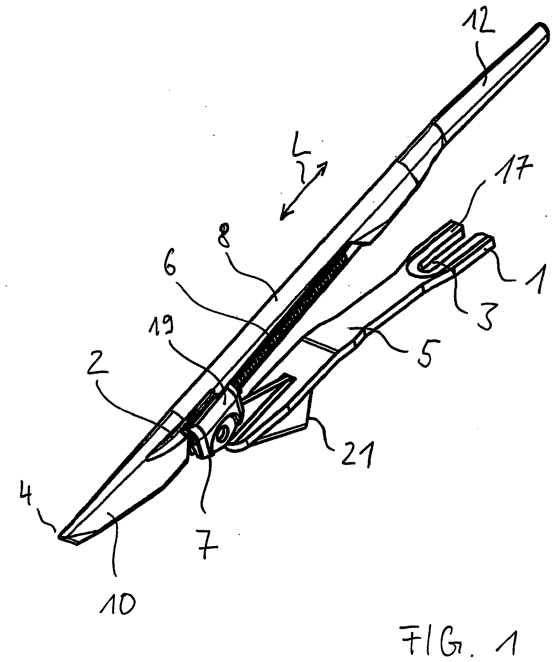

In der Figur 1 ist eine Ausführungsform des erfindungsgemäßen Hebers für Erntegut perspektivisch dargestellt. Der Heber umfasst eine Tragschiene 5, welche zur Befestigung des Hebers an einem Mähwerk einer Erntemaschine vorgesehen ist. Dazu weist die Tragschiene 5 an ihrem hinteren Ende 1 eine Ausnehmung 3 auf, welche als ein zu dem hinteren Ende 1 hin geöffnetes Langloch ausgeführt ist. Die Ausnehmung 3 lässt sich auf einen Bolzen mit Gewinde an dem Mähwerk aufschieben und mit einer Gewindemutter sichern (nicht dargestellt). Gleichzeitig wird eine Aufnahme 21 an der Tragschiene 5 auf einen Mähfinger (nicht dargestellt) des Mähwerks aufgeschoben. Ein Vorteil der Ausführung mit dem Langloch 3 besteht darin, dass eine Montage der Tragschiene an unterschiedlichen Fingertypen möglich ist, auch wenn die Mähfinger verschiedene Längen und Dicken aufweisen. Auf eine Anschraubfläche 17, welche die Ausnehmung 3 umgibt, wird später noch näher eingegangen.

Die folgenden Ausführungen dienen der Erläuterung weiterer Merkmale der dargestellten Ausführungsform, die unabhängig von der erfindungsgemäßen Ausführungsform sind. An ihrem vorderen Ende weist die Tragschiene 5 einen Profilträger 7 auf, an dem ein Heberprofil 8 zur lösbaren Befestigung vorgesehen ist. Das Heberprofil 8 ist bevorzugt in einer Mehrzahl von in Längsrichtung L des Heberprofils 8 beabstandeten Positionen mit dem Profilträger 7 verbindbar. Dazu weist der Profilträger 7 im dargestellten Ausführungsbeispiel zwei gegeneinander verspannbare Klemmbacken 19 auf, welche auf einen Verbindungsbereich 6 des Heberprofils 8 einwirken. Das Heberprofil 8 an sich ist ein in der durch den Doppelpfeil L gekennzeichneten Längsrichtung langgestrecktes, in etwa stabförmiges Bauteil mit einem Kopfbereich 10 an seinem führenden Ende 4, welcher dazu vorgesehen ist, möglichst knapp über dem Boden geführt zu werden. Der Kopfbereich 10 kann beispielsweise in etwa pfeilartig geformt sein, von der Spitze am führenden Ende 4 aus nach hinten breiter werdend, während ein mittlerer Abschnitt des Heberprofils 8 mit dem Verbindungsbereich 6 einen im wesentlichen gleichbleibenden Querschnitt aufweist und ein Ende 12 des Heberprofils 8 nach hinten leicht schmaler werdend zusammenläuft. Auf die Ausgestaltung des Verbindungsbereichs 6 und eines Durchbruchs 2 des Heberprofils 8 wird nachfolgend mit Bezug auf weitere Figuren eingegangen.

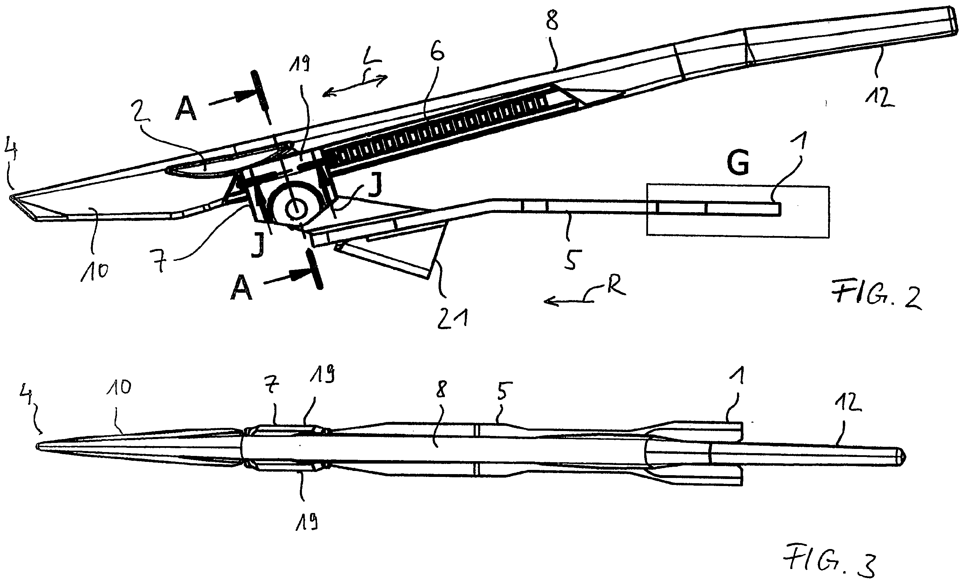

In den Figuren 2 und 3 ist der Heber für Erntegut gemäß Figur 1 in zwei Ansichten dargestellt, wobei die Figur 2 in Einbaulage eine Seitenansicht darstellt und die Figur 3 eine Ansicht von oben. Eine Arbeitsrichtung ist durch den mit R bezeichneten Pfeil dargestellt. Es handelt es sich um die Arbeitsrichtung des nicht dargestellten Mähwerks, welche in der Regel der Fahrtrichtung der Erntemaschine entspricht. Das bedeutet, der Heber für Erntegut bewegt sich im Betrieb in Richtung des Pfeils R durch das Erntegut hindurch, richtet dieses dabei auf und aus, um es dem Mähwerk so zuzuführen, dass das Erntegut am Halm geschnitten wird und keine Früchte zerstört werden. Zur Anpassung an verschiedene Arten von Erntegut kann der Profilträger 7 über eine quer zur Arbeitsrichtung R ausgerichtete Drehachse drehbeweglich verstellbar sein. Bevorzugt ist vorgesehen, dass das Heberprofil 8 in einer Mehrzahl von in seiner Längsrichtung L beabstandeten Positionen mit dem Profilträger 7 verbindbar ist. Dazu wirkt der Profilträger 7 mit dem Verbindungsbereich 6 zusammen, welcher auch den maximalen Verstellbereich angibt. Denkbar ist, dass die gegeneinander verspannbaren Klemmbacken 19 des Profilträgers 7 sich in den Verbindungsbereich 6 derart hinein arbeiten, dass eine im wesentlichen auf Kraftschluss basierende Verbindung hergestellt wird. Gemäß einer bevorzugten Ausführungsform ist das Heberprofil 8 jedoch formschlüssig mit dem Profilträger 7 verbindbar. Dazu weist der Verbindungsbereich 6 eine Ausformung auf, die eine komplementäre Entsprechung an dem Profilträger 7 findet, so dass die Ausformungen entsprechend ineinander eingreifen können und so eine in Längsrichtung L formschlüssige Verbindung bilden. Als Ausformung wird in der Regel eine Verzahnung gewählt. Durch die formschlüssige Verbindung wird vorteilhaft schon bei geringen Anzugskräften am Profilträger 7 eine stabile Verbindung zwischen dem Profilträger 7 und dem Heberprofil 8 erzeugt, als mit einer auf Klemmkraft beruhenden kraftschlüssigen Verbindung.

Der Kopfbereich 10 des Heberprofils 8 wird bei bestimmtem Erntegut, wie beispielsweise von der Ernte von Bohnen, äußerst knapp über der Bodenoberfläche geführt und kann dabei sogar kurzfristig in den Boden eindringen, wodurch verhindert werden soll, dass weit unten am Strauch wachsende Schoten durch das Mähwerk zerstört werden. Das Heberprofil 8 ist dabei besonders starken Belastungen ausgesetzt, weshalb der Verschleiß an den Heberprofilen 8 vergleichsweise hoch ist. Es hat sich als vorteilhaft herausgestellt, die Heberprofile 8 aus einem Material herzustellen, das vergleichsweise günstig in der Herstellung, aber widerstandsfähig und insbesondere gut elastisch verformbar ist. Wenn der Kopfbereich 10 beispielsweise auf Steine im Boden trifft, wird das Kunststoffprofil 8 elastisch deformiert und kehrt im Wesentlichen in seine ursprüngliche Form zurück. Zur Unterstützung der elastischen Deformierbarkeit des Kopfbereiches 10 weist das Heberprofil 8 bevorzugt einen Durchbruch 2 auf, welcher quer zu der Längs- bzw. Arbeitsrichtung durch das Heberprofil 8 hindurch verläuft. Der Durchbruch 2 erstreckt sich in Längsrichtung L zwischen dem vorderen Ende 4 des Heberprofils 8 und dem Verbindungsbereich 6, insbesondere in einem Übergangsbereich zwischen dem Kopfbereich 10 und dem Verbindungsbereich 6. Da in dem Verbindungsbereich 6 der Profilträger 7 das Heberprofil 8 hält, ist anzustreben, dass der Verbindungsbereich 6 nicht deformiert wird, da sonst die formschlüssige Verbindung mit dem Profilträger 7 gelöst werden könnte, was zu einem Verlust des Heberprofils 8 während des Ernteeinsatzes zur Folge haben könnte. Das Fenster 2 stellt eine Schwächung des Heberprofils 8 in dem Übergangsbereich zwischen dem Kopfbereich 10 und dem Verbindungsbereich 6 dar, wodurch vorteilhaft erreicht wird, dass der Kopfbereich 10 unter starker Krafteinwirkung zur Seite ausgelenkt wird, wogegen der Verbindungsbereich 6 nicht wesentlich verformt wird. Eine Kraftübertragung vom Kopfbereich 10 zu dem Verbindungsbereich 6 findet über den durch den Durchbruch 2 geschwächten Übergangsbereich praktisch nicht statt. Insbesondere wird der Kopfbereich 10 nach Wegfall der Belastung elastisch wieder in seine ursprüngliche Position zurückgestellt. Der Durchbruch 2 kann dabei durchgehend ausgeführt sein, was jedoch nicht zwingend erforderlich ist. Gemäß einer bevorzugten Ausführungsform ist der Durchbruch 2 durch einen Steg 16 verschlossen, dessen Widerstand gegenüber Verformung wesentlich geringer ist, als bei dem Kopfbereich 10. Ein Vorteil des geschlossenen Durchbruchs besteht darin, dass sich keine Halme oder Ähnliches in dem Durchbruch verfangen können, die das Mähergebnis beeinflussen könnten.

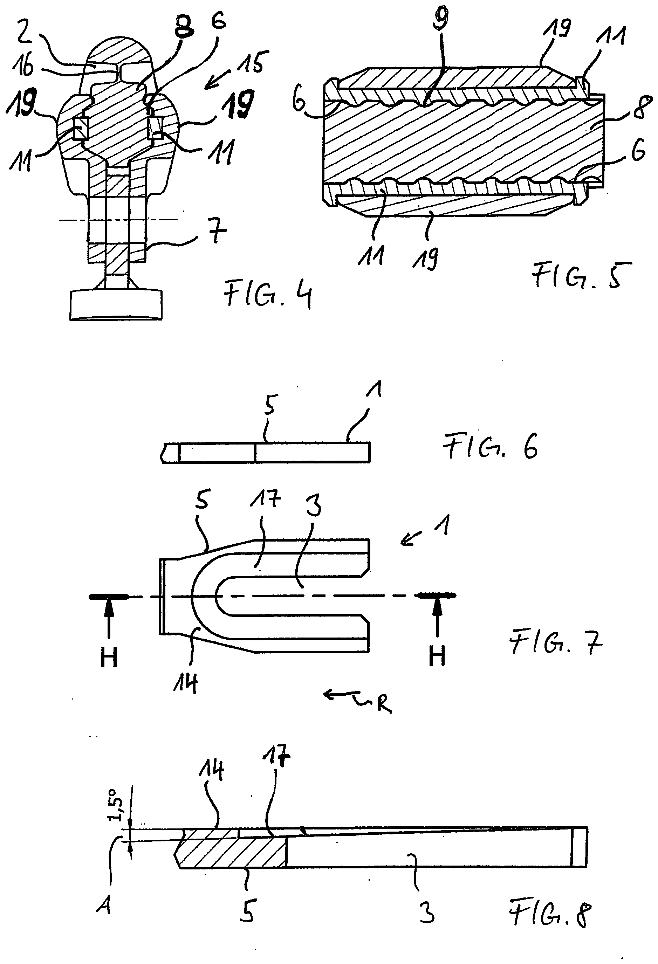

Im Zusammenhang mit den Figuren 4 und 5 wird nachfolgend die formschlüssige Verbindung zwischen dem Heberprofil 8 und dem Profilhalter 7 näher erläutert. Die Figur 4 zeigt einen Querschnitt entlang der Linie A-A in Figur 2 und die Figur 5 zeigt einen Schnitt entlang der Linie J-J, ebenfalls in Figur 2. Der Querschnitt in Figur 4 zeigt den Profilträger 7 mit dem Heberprofil 8, wobei das Heberprofil 8 von einer Klemmbackenanordnung 15 gehalten wird. Die Klemmbackenanordnung 15 greift in einem Bereich unterhalb des Durchbruchs 2, der durch einen vergleichsweise dünnen Steg 16 verschlossen ist, an. Die Klemmbackenanordnung 15 umfasst zwei gegeneinander wirkende und gegeneinander verspannbare Klemmbacken 19, wobei ebenso gut drei oder mehr Spannbacken denkbar wären, die auf einen dementsprechend in der Form angepassten Verbindungsbereich 6 des Heberprofils 8 wirken könnten. Die Längsrichtung L des Heberprofils 8 ist in der Figur 4 senkrecht zu der Zeichenebene ausgerichtet. In den übrigen Raumrichtungen umschließen die Klemmbacken 19 das Heberprofil 8 derart, dass eine formschlüssige Verbindung gegeben ist. In der Längsrichtung L wird diese formschlüssige Verbindung im dargestellten Ausführungsbeispiel durch Einlegeteile 11 hergestellt, welche zwischen den Klemmbacken 19 und dem Verbindungsbereich 6 des Heberprofils 8 angeordnet sind. In der Figur 5 ist erkennbar, dass die Einlegeteile 11 in der Längsrichtung L wiederum formschlüssig an den Klemmbacken 19 festgelegt sind. Die Einlegeteile 11 weisen auf ihrer dem Verbindungsbereich 6 des Heberprofils 8 zugewandten Seite eine Verzahnung 9 auf, welche mit einer entsprechenden Gegenverzahnung des Verbindungsbereichs 6 zusammenwirkt. Durch die Verzahnung 9 ist auch in Längsrichtung 11 eine überwiegend auf Formschluss der Bauteile beruhende Verbindung gegeben. Die Einlegeteile 11 haben den Vorteil, dass sie austauschbar sind, wodurch Heberprofile 8 mit unterschiedlichen Ausformungen der Verbindungsbereiche 6 verwendet werden können, indem jeweils dazu kongruent geformte Einlegeteile 11 zur Verfügung gestellt werden. Außerdem lassen sich die Einlegeteile 11 deutlich besser austauschen, wenn es zu einer Beschädigung der Verzahnung durch zu hohe Belastung kommt.

Die folgenden Ausführungen beziehen sich auf die Merkmale der erfindungsgemäßen Ausführungsform. Anhand der Figuren 6 bis 8 wird die Befestigung der Tragschiene 5 in dem Mähwerk näher erläutert. Die Figur 6 zeigt ein mit G bezeichnetes Detail aus Figur 2 in einer Seitenansicht. Die Figur 7 zeigt das Detail gemäß Figur 6 in einer Ansicht von oben. Die Tragschiene 5 weist in der dargestellten Ausführungsform, die dem in Figur 1 dargestellten Heber entspricht, eine Ausnehmung 3 zur Befestigung an dem Mähwerk (nicht dargestellt) auf, wobei die Ausnehmung 3 als ein sich in Arbeitsrichtung R erstreckendes Langloch ausgeführt ist. Gemäß einer bevorzugten Ausführungsform ist vorgesehen, dass die Ausnehmung 3 zu dem in Arbeitsrichtung R hinteren Ende 1 der Tragschiene 5 hin geöffnet ist. In der Figur 8 ist ein Schnitt entlang der Linie H-H in Figur 7 vergrößert dargestellt. Um die Ausnehmung 3 herum ist eine Anschraubfläche 17 derart in die Oberfläche 14 der Tragschiene 5 eingearbeitet, dass durch die Anschraubfläche 17 und die Oberfläche 14 definierte Ebenen einen spitzen Winkel A einschließen, dessen Winkelmaß im dargestellten Ausführungsbeispiel 1,5 Grad beträgt.

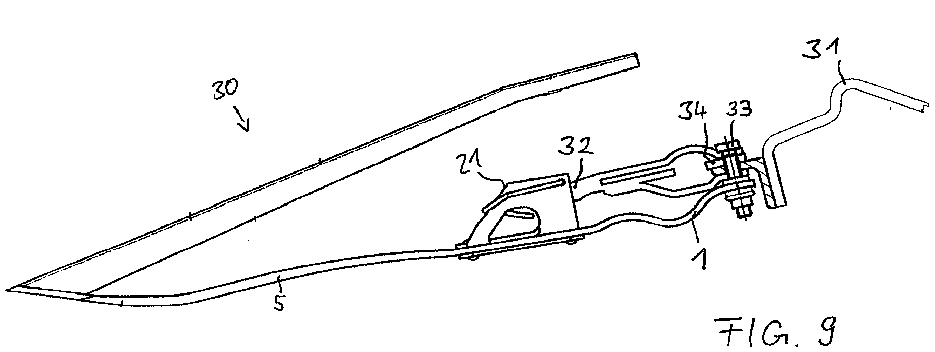

In der Figur 9 ist der Mähbalken 31 in schematischer Darstellung erkennbar, von dem ein Mähfinger 32 vorstehend dargestellt ist. Dieser ist über eine Schraube 33 am Mähbalken 31 festgelegt. Es sind in die Zeichenebene hinein, bzw. aus dieser heraus, mehrere weitere Mähfinger 32 dem Mähbalken 31 mit Abstand zueinander zugeordnet. Die Mähfinger 32 dienen zur Führung eines Messerbalkens 34, der Mähklingen zum Abtrennen des Erntegutes aufweist. Der dargestellte Heber 30 für Erntegut entspricht dem Stand der Technik. Die Befestigung der erfindungsgemäßen Heber für Erntegut erfolgt an einem ebensolchen Mähwerk. Das hintere Ende 1 der Tragschiene 5 ist beispielsweise über eine Schraube 33 am Mähbalken 31 festlegbar. Die Tragschiene 5 ist bevorzugt aus einem Flachmaterial hergestellt und weist biegeelastische Eigenschaften auf. Die Tragschiene 5 ist über Befestigungsmittel in Form der Aufnahme 21 am Mähfinger 32 abgestützt. Die Aufnahme 21 ist mit der Tragschiene 5 beispielsweise durch Nieten verbunden.

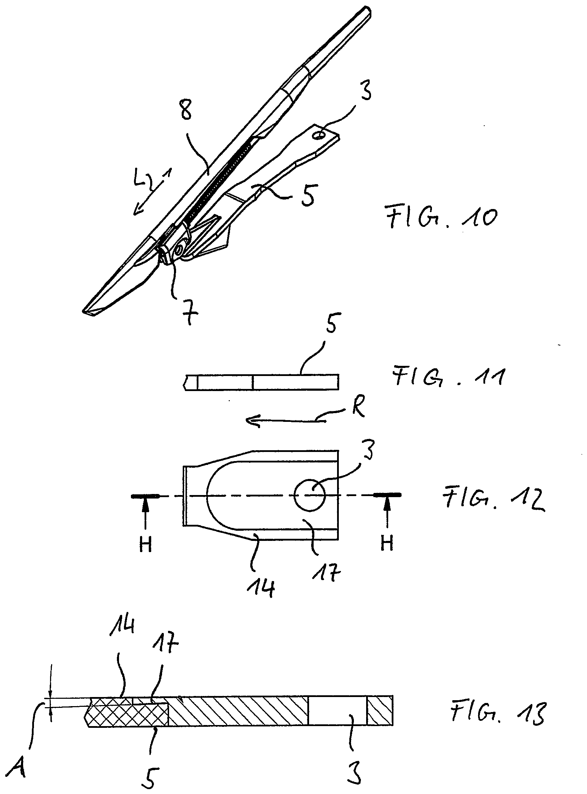

In der Figur 10 ist eine hinsichtlich der Tragschiene 5 alternative Ausführungsform zu dem in Figur 1 dargestellten Heber perspektivisch dargestellt. Zur Befestigung weist die Tragschiene 5 eine Ausnehmung 3 in Form einer kreisrunden Bohrung auf, die gegenüber einem Langloch bzw. einem nach hinten geschlitzten Langloch gemäß Figuren 6 bis 8 weniger aufwändig herzustellen ist.

Anhand der Figuren 11 bis 13 wird erneut die Befestigung der Tragschiene 5 in dem Mähwerk näher erläutert. Die Figur 11 zeigt ein Detail der Tragschiene 5 aus Figur 10 in einer Seitenansicht. Die Figur 12 zeigt das Detail gemäß Figur 11 in einer Ansicht von oben. Die Tragschiene 5 weist in der dargestellten Ausführungsform, die dem in Figur 10 dargestellten Heber entspricht, eine Ausnehmung 3 zur Befestigung an dem Mähwerk (nicht dargestellt) auf, wobei die Ausnehmung 3 als eine kreisrunde Bohrung ausgeführt ist. In der Figur 13 ist ein Schnitt entlang der Linie H-H in Figur 12 vergrößert dargestellt. Um die Ausnehmung 3 herum ist eine Anschraubfläche 17 derart in die Oberfläche 14 der Tragschiene 5 eingearbeitet, dass durch die Anschraubfläche 17 und die Oberfläche 14 definierte Ebenen einen spitzen Winkel A einschließen, dessen Winkelmaß bevorzugt etwa 1,5 Grad beträgt.

## Patentansprüche

1. Heber für Erntegut für ein Mähwerk einer Erntemaschine, umfassend eine an dem Mähwerk befestigbare Tragschiene (5), wobei ein Heberprofil (8) mit der Tragschiene verbunden ist und die Tragschiene eine Ausnehmung (3) zur Befestigung an dem Mähwerk aufweist,
**dadurch gekennzeichnet,**
**dass** um die Ausnehmung (3) herum eine Anschraubfläche (17) derart in die Oberfläche (14) der Tragschiene (5) eingearbeitet ist, dass durch die Anschraubfläche und die Oberfläche definierte Ebenen einen spitzen Winkel (A) einschließen.

2. Heber für Erntegut nach Anspruch 1,
**dadurch gekennzeichnet,**
**dass** die Ausnehmung (3) als ein sich in einer Arbeitsrichtung (R) erstreckendes Langloch ausgeführt ist und/oder dass die Ausnehmung (3) zu einem in Arbeitsrichtung (R) hinteren Ende (1) der Tragschiene (5) hin geöffnet ist.

3. Heber für Erntegut nach Anspruch 2,
**dadurch gekennzeichnet,**
**dass** der spitze Winkel (A) ein Winkelmaß von weniger als fünf Grad aufweist, vorzugsweise von weniger als drei Grad und besonders bevorzugt von etwa 1,5 Grad.

4. Heber für Erntegut nach einem der Ansprüche 1 bis 3,
**dadurch gekennzeichnet,**
**dass** die Tragschiene eine Aufnahme (21) für einen Mähfinger an dem Mähwerk der Erntemaschine aufweist.

## Claims

1. Crop lifter for a mower of a harvesting machine, comprising a support bar (5) attachable on the mower, wherein a lifter rod (8) is connected to the support bar and the support bar has a recess (3) for attachment on the mower, **characterised in that** a bolting face (17) is worked into the upper face (14) of the support bar (5) around the recess (3) such, that planes, defined by the bolting face and the upper face, enclose an acute angle (A).

2. Crop lifter according to claim 1, **characterised in that** the recess (3) is formed as an elongated hole extending in a working direction (R) and/or that the recess (3) is open towards a rear end (1) of the support bar (5), when seen in working direction (R).

3. Crop lifter according to claim 2, **characterised in that** the acute angle (A) has an angular dimension of less than five degrees.

4. Crop lifter according to one of claims 1 to 3, **characterised in that** the support bar has a receptacle (21) for a mowing finger on the mower of the harvesting machine.

## Revendications

1. Releveur de récoltes pour une faucheuse d'une moissonneuse, comprenant un rail porteur (5) pouvant se fixer sur la faucheuse, un profilé releveur (8) étant assemblé avec le rail porteur et le rail porteur comportant un évidement (3) pour sa fixation sur la faucheuse, **caractérisé en ce qu'**autour de l'évidement (3), une surface de vissage (17) est incorporée dans la surface (14) du rail porteur (5), de sorte que des plans définis par la surface de vissage et par la surface incluent un angle aigu (A).

2. Releveur de récoltes selon la revendication 1, **caractérisé en ce que** l'évidement (3) est réalisé sous la forme d'un trou oblong, s'étendant dans une direction de travail (R) et/ou **en ce que** l'évidement (3) est ouvert en direction d'un extrémité postérieure (1) du rail porteur (5), dans la direction de travail (R) .

3. Releveur de récoltes selon la revendication 2, **caractérisé en ce que** l'angle aigu (A) présente un angle de dimension inférieure à 5 degrés, de préférence inférieure à trois degrés et de manière particulièrement préférentielle, inférieure à environ 1,5 degré.

4. Releveur de récoltes selon l'une quelconque des revendications 1 à 3, **caractérisé en ce que** le rail porteur comporte un logement (21) pour un doigt de coupe sur la faucheuse de la moissonneuse.
